(19)

**Europäisches Patentamt**
**European Patent Office**
**Office européen des brevets**

(11) **EP 4 238 874 A1**

(12) **EUROPEAN PATENT APPLICATION**

(43) Date of publication:
**06.09.2023 Bulletin 2023/36**

(51) International Patent Classification (IPC):
**B64D 47/04** (2006.01)

(21) Application number: **23156334.7**

(22) Date of filing: **13.02.2023**

(52) Cooperative Patent Classification (CPC):
**B64D 47/04;** B60Q 1/24; B60Q 1/245; B64D 47/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.03.2022 IN 202211011207**
**14.04.2022 US 202217659299**

(71) Applicant: **HONEYWELL INTERNATIONAL INC.**
**Charlotte, NC 28202 (US)**

(72) Inventors:
• **DAS, Shouvik**
**Charlotte 28202 (US)**

• **SAXENA, Sunit Kumar**
**Charlotte 28202 (US)**
• **K, Abhijit**
**Charlotte 28202 (US)**
• **BRAHMBHATT, Kartik**
**Charlotte 28202 (US)**
• **POLICY, Richard**
**Charlotte 28202 (US)**
• **GIFFEN, Craig**
**Charlotte 28202 (US)**

(74) Representative: **LKGlobal UK Ltd.**
**Cambridge House**
**Henry Street**
**Bath BA1 1BT (GB)**

(54) **METHODS AND SYSTEM FOR DIRECT SLEWING A LIGHT BEAM AXIS**

(57) Methods and systems are provided for slewing a light beam axis directly between points on the ground. One method involves determining a first position associated with a beam axis of a lighting arrangement (120) in a Cartesian reference frame based on an initial orientation of the lighting arrangement (120) in a spherical reference frame, determining an adjustment for the lighting arrangement (120) in the Cartesian reference frame in response to a user input, determining an updated position for the beam axis in the Cartesian reference frame based on the first position and the adjustment in the Cartesian reference frame, transforming the updated position for the beam axis in the Cartesian reference frame to an updated orientation of the lighting arrangement in the spherical reference frame, and concurrently commanding actuators (124,126) associated with the lighting arrangement (120) to slew the lighting arrangement (120) from the initial orientation to the updated orientation in the spherical reference frame.

FIG. 1

EP 4 238 874 A1

## Description

### CROSS-REFERENCE TO RELATED APPLICATION

This application claims priority to India Provisional Patent Application No. 202211011207, filed March 2, 2022, the entire content of which is incorporated by reference herein.

### TECHNICAL FIELD

The technical field generally relates to vehicle systems, and more particularly, embodiments of the subject matter relate to lighting systems for aircraft and other vehicles with Cartesian control of a light beam axis.

### BACKGROUND

Rotorcraft Searchlights are illumination apparatus mounted under the belly or chin of a rotorcraft. They generate a beam of light that may be used to illuminate a point of interest on the ground while the rotorcraft is in the air. Maintaining the rotorcraft attitude while controlling the searchlight beam of light is cognitively demanding.

Some searchlight configurations provide pan and tilt control to maneuver the direction/location of the searchlight beam of light on the ground, independent of the rotorcraft movement (as opposed to searchlight configurations that are rigidly mounted and require the rotorcraft itself to maneuver in order to re-orient and control the direction/location of the searchlight beam of light). However, maneuvering the direction/location of the searchlight beam of light on the ground is difficult under normal circumstances, even with searchlight configurations that provide pan and tilt control. This is because, by virtue of the elevation of the rotorcraft and the polar control of the searchlight, in order to move from a point A to a point B on the ground, an operator generally must make multiple sequential movements, each being a combination of pan and tilt (e.g., using a 4-way hat switch), which in turn causes the beam of light to move in a corresponding combination of arcs and lines on the ground, rather than a direct path from point A to point B. Additionally, after arriving to point B, the operator needs to predict or anticipate the orientation the searchlight is or will be in while giving the next set of pan and tilt step commands to move from point B to point C, and so on. Accordingly, it is desirable to provide pilots with systems and methods that improve their control over the search light, and that are simpler to use, easing the cognitive demand. Other desirable features and characteristics will become apparent from the subsequent detailed description and the appended claims, taken in conjunction with the accompanying drawings and this background.

### BRIEF SUMMARY

Methods and systems are provided for operating a lighting arrangement onboard a vehicle, such as a rotorcraft or other aircraft. An exemplary method involves determining a first position associated with a beam axis of the lighting arrangement in a Cartesian reference frame based on an initial orientation of the lighting arrangement in a spherical reference frame, determining an adjustment for the lighting arrangement in the Cartesian reference frame in response to a user input, determining an updated position for the beam axis in the Cartesian reference frame based on the first position and the adjustment in the Cartesian reference frame, transforming the updated position for the beam axis in the Cartesian reference frame to an updated orientation of the lighting arrangement in the spherical reference frame, and commanding actuation arrangements associated with the lighting arrangement to slew the lighting arrangement from the initial orientation to the updated orientation in the spherical reference frame.

In another embodiment, an apparatus is provided for a computer-readable medium having computer-executable instructions stored thereon that, when executed by a processing system, cause the processing system to determine a first position associated with a beam axis of a lighting arrangement in a Cartesian reference frame based on an initial orientation of the lighting arrangement in a spherical reference frame, determine an adjustment for the lighting arrangement in the Cartesian reference frame in response to a user input, determine an updated position for the beam axis in the Cartesian reference frame based on the first position and the adjustment in the Cartesian reference frame, transform the updated position for the beam axis in the Cartesian reference frame to an updated orientation of the lighting arrangement in the spherical reference frame, and command actuation arrangements associated with the lighting arrangement to slew the lighting arrangement from the initial orientation to the updated orientation in the spherical reference frame.

In another embodiment, a lighting system is provided that includes a light to project a beam of light along a beam axis, a pan control actuator coupled to the light and operable to pan the beam axis, a tilt control actuator coupled to the light and operable to tilt the beam axis, a user input device to receive a user input for adjustment of the beam axis. And a controller coupled to the user input device, the pan control actuator and the tilt control actuator. The controller is configured to determine a first position associated with the beam axis in a Cartesian reference frame based on an initial pan angle for the pan control actuator and an initial tilt angle for the tilt control actuator, determine an adjustment in the Cartesian reference frame in response to the user input, determine an updated position for the beam axis in the Cartesian reference frame based on the first position and the adjustment in the Cartesian reference frame, transform the updated position for the beam axis in the Cartesian reference frame to an updated pan angle for the pan control actuator and an updated tilt angle for the tilt control actuator, and concurrently operating the pan control actuator from the initial pan angle to the updated pan angle while operating the tilt control actuator from the initial tilt angle to the updated tilt angle to slew the beam axis from the first position to the updated position in response to the user input.

This summary is provided to describe select concepts in a simplified form that are further described in the detailed description. This summary is not intended to identify key or essential features of the claimed subject matter, nor is it intended to be used as an aid in determining the scope of the claimed subject matter.

BRIEF DESCRIPTION OF THE DRAWINGS

The present application will hereinafter be described in conjunction with the following drawing figures, wherein like numerals denote like elements, and:

FIG. 1 is a block diagram of a system for a rotorcraft, in accordance with an exemplary embodiment;
FIG. 2 is an image showing the conversion between a spherical coordinate system and a cartesian coordinate system;
FIG. 3 is an image showing the difficulty of controlling a light beam to move along a straight-line using pan and tilt controls;
FIG. 4 is an example of a collective stick grip, as may be used to provide manual input, accordance with an exemplary embodiment;
FIG. 5 is a flow diagram illustrating a direct slewing process suitable for implementation by the system of FIG. 1 in accordance with one or more exemplary embodiments; and
FIG. 6 depicts an exemplary tactile user input adjustment suitable for use with the direct slewing process of FIG. 5 in the system of FIG. 1 in accordance with an exemplary embodiment.

DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Thus, any embodiment described herein as "exemplary" is not necessarily to be construed as preferred or advantageous over other embodiments. The embodiments described herein are exemplary embodiments provided to enable persons skilled in the art to make or use the invention and not to limit the scope of the invention that is defined by the claims. Furthermore, there is no intention to be bound by any expressed or implied theory presented in the preceding technical field, background, summary, or the following detailed description.

For purposes of explanation, the subject matter is primarily described herein in the context of an aircraft. For example, an aircraft, such as a helicopter, an unmanned aerial vehicle (UAV), an urban air mobility vehicle (UAM), or the like, may include a retractable lighting system for purposes of selectively illuminating a region or area of the ground beneath the aircraft, such as, for example, a searchlight for search and rescue operations, which may alternatively be referred to herein as a search and rescue (SAR) light. However, the subject matter described herein is not necessarily limited to aircraft or avionic environments or SAR operations, and in alternative embodiments, may be implemented in an equivalent manner for ground operations, marine operations, or otherwise in the context of other types of vehicles and travel spaces.

Embodiments of the subject matter described herein generally relate to systems and methods that facilitate a pilot or other vehicle operator controlling a lighting arrangement in a Cartesian manner to slew the beam axis of the lighting arrangement in a straight line between positions in a Cartesian coordinate reference frame. An initial position associated with the beam axis of the lighting arrangement is determined in the Cartesian coordinate reference frame based on the initial orientation of the lighting arrangement in a spherical reference frame. In response to a user input to slew the beam axis, a corresponding adjustment for the lighting arrangement is determined by mapping the user input to constituent adjustments along the reference axes of the Cartesian coordinate reference frame. The adjustments along the reference axes may be added or otherwise combined with the initial position associated with the beam axis to obtain an updated position of the beam axis in the Cartesian coordinate reference frame. The updated position for the beam axis in the coordinate reference frame is transformed to an updated orientation of the lighting arrangement in the spherical reference frame, and the actuation arrangements associated with the lighting arrangement are commanded to slew the lighting arrangement from the initial orientation to the updated orientation in the spherical reference frame by concurrently operating both the pan control actuator and the tilt control actuator.

In this manner, the subject matter described herein allows a pilot or other operator to control the searchlight beam on ground in a Cartesian manner to move the beam in a manner that is perceived as straight line movements. This prevents disorientation and repeated corrections, while also reducing the amount of time required to manually control the searchlight when trying to reach a particular point on the ground irrespective of the current helicopter orientation. Cartesian control of the beam axis allows for the use of an 8-point hat switch, a touch pad or other tactile user input, or other similar user input devices that accommodate multidimensional or complex user input adjustments to the beam axis that are not constrained to sequential adjustments in one direction at a time in a spherical coordinate frame (e.g., pan or tilt).

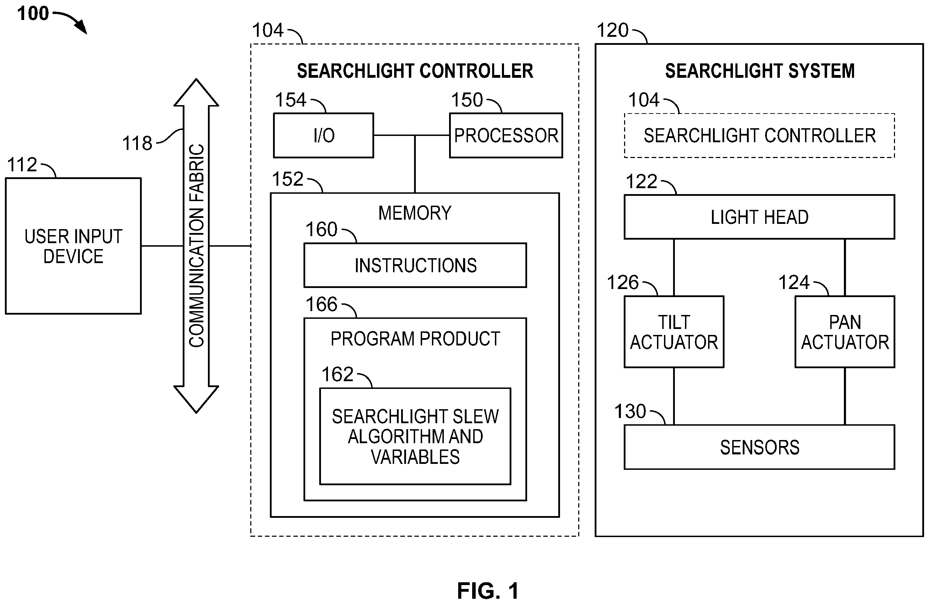

FIG. 1 depicts an exemplary embodiment of a control system 100 suitable for use with a lighting system 120 onboard a vehicle, such as an aircraft. In exemplary embodiments, the vehicle is realized as a rotorcraft, such as a helicopter, an urban air mobility (UAM) vehicle, or the like. Accordingly, the vehicle may alternatively be referred to herein as a rotorcraft. In some embodiments, the controller 104 is integrated with the lighting system 120. In other embodiments, the controller 104 may be integrated within a preexisting vehicle management system, avionics system, cockpit display system (CDS), flight controls system (FCS), or rotorcraft flight management system (FMS). Although the controller 104 is shown as an independent functional block, onboard the rotorcraft, in other embodiments, it may exist in an electronic flight bag (EFB) or portable electronic device (PED), such as a tablet, cellular phone, or the like. In embodiments in which the controller is within an EFB or a PED, a display system and a user input device 112 may also be part of the EFB or PED.

The controller 104 may be operationally coupled to any combination of the following rotorcraft systems: a communication system and fabric 118; a rotorcraft inertial navigation system; a display system; a user input device 112; and the lighting system 120. In some embodiments, the controller 104 is also operationally coupled to an external source that communicates wirelessly with the controller 104. The functions of these rotorcraft systems, and their interaction, are described in more detail below.

In various embodiments, the lighting system 120 is realized as a smart searchlight apparatus that includes a lighting arrangement 122, alternatively referred to herein as a light head. In exemplary embodiments, the lighting arrangement 122 projects a three-dimensional beam of light along a beam axis to land on the ground (or a surface) at beam axis touchdown. The beam of light generally surrounds the beam axis and extends uniformly therefrom in a radial direction. The orientation of the light head 122 and resulting beam axis, with respect to the rotorcraft, is controlled by one or both of a pan control actuator 124 (e.g., a motor and/or electronics), and a tilt control actuator 126 (e.g., a motor and/or electronics). Sensors 130 may detect orientation and configuration status of the light head 122 and convert this status information into electrical signals for processing.

In some embodiments, a real-time rotorcraft state is described by state data generated by a rotorcraft inertial navigation system. The real-time rotorcraft state may therefore be described by any of: an instantaneous location (e.g., the latitude, longitude, orientation), an instantaneous heading (i.e., the direction the rotorcraft is traveling in relative to some reference), a flight path angle, a vertical speed, a ground speed, an instantaneous altitude (or height above ground level), and a current phase of flight of the rotorcraft. As used herein, "real-time" is interchangeable with current and instantaneous. The rotorcraft inertial navigation system may include or otherwise be realized as a global positioning system (GPS), inertial reference system (IRS), or a radio-based navigation system (e.g., VHF omni-directional radio range (VOR) or long-range aid to navigation (LORAN)), and may include one or more navigational radios or other sensors suitably configured to support operation, as will be appreciated in the art. In various embodiments, the data referred to herein as the real-time rotorcraft state data may be referred to as navigation data. The real-time rotorcraft state data is made available, generally by way of the communication system and fabric 118, so other components, such as the controller 104 may further process and/or handle the rotorcraft state data.

In various embodiments, the communications system and fabric 118 is configured to support instantaneous (i.e., real time or current) communications between on-board systems, the controller 104, and potentially one or more external data source(s). As a functional block, the communications system and fabric 118 may represent one or more transmitters, receivers, and the supporting communications hardware and software required for components of the system 100 to communicate as described herein. In various embodiments, the communications system and fabric 118 may have additional communications not directly relied upon herein, such as bidirectional pilot-to-ATC (air traffic control) communications via a datalink, and any other suitable radio communication system that supports communications between the rotorcraft and various external source(s).

The user input device 112 and the controller 104 are cooperatively configured to allow a user (e.g., a pilot, co-pilot, or crew member) to interact with the controller 104 and/or the searchlight system 120, as described in greater detail below. Depending on the embodiment, the user input device 112 may be realized as a cursor control device (CCD), keypad, touchpad, touch panel (or touchscreen), touch pad, joystick, knob, voice controller, gesture controller, or another suitable device adapted to receive input from a user.

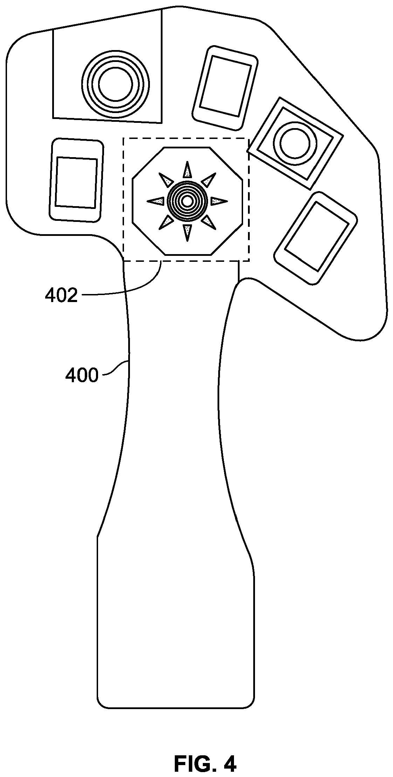

As shown in FIG. 4, a common user input device 112 for searchlight control is called a collective stick grip 400, or thrust grip, having a hat switch 402. In exemplary embodiments described herein, the hat switch 402 is realized as an 8-way hat switch that can manipulated in eight directions, where four directions correspond to moving along or with respect to an individual reference axis in a Cartesian coordinate reference frame (for example, right, left, forward (or up) and reverse (or down) and four directions correspond to diagonal movements along or with respect to both reference axes in the Cartesian coordinate reference frame (for example, diagonally forward and to the right, diagonally forward and to the left, diagonally back and to the right, diagonally back and to the left). As described in greater detail below, to adjust or otherwise control the beam axis of the light head 122, a pilot or other user onboard the rotorcraft manipulates the hat switch 402 in one or more of the different eight directions sequentially, thereby generating cartesian inputs that can be used by the controller 104 to slew the beam axis in a straight line on the ground.

Still referring to FIG. 1, in alternative embodiments when the user input device 112 is configured as a touchpad or touchscreen, a pilot or other user onboard the rotorcraft manipulates the touchpad or touchscreen to provide input in any direction relative to the Cartesian coordinate reference frame defined by the touchpad, where the position of the user input on the touchpad is mapped to a particular position in the Cartesian coordinate reference frame to provide a cartesian input that can be used by the controller 104 to slew the beam axis in a straight line on the ground. In some embodiments, when the user input device 112 is configured as a touchpad or touchscreen, it may be integrated with a display system. In some embodiments, the user input device 112 may be used by a pilot to communicate with external sources, to modify or upload a program product 166, etc. In various embodiments, the display system and user input device 112 are onboard the rotorcraft and are also operationally coupled to the communication system and fabric 118. In some embodiments, the controller 104, user input device 112, and display system are configured as a control display unit (CDU).

In one or more embodiments, the controller 104 generally represents the component (or combination of components) that facilitate communications and/or interaction between the elements of the system 100 and performing additional processes, tasks and/or functions to support operation of the system 100, as described herein. In various embodiments, the controller 104 may be any hardware, software, firmware, electronic control component, processing logic, and/or processor device, individually or in any combination. Depending on the embodiment, the controller 104 may be implemented or realized with a general purpose processor (shared, dedicated, or group) controller, microprocessor, or microcontroller, and memory that executes one or more software or firmware programs; a content addressable memory; a digital signal processor; an application specific integrated circuit (ASIC), a field programmable gate array (FPGA); any suitable programmable logic device; combinational logic circuit including discrete gates or transistor logic; discrete hardware components and memory devices; and/or any combination thereof, designed to perform the functions described herein.

Accordingly, in FIG. 1, an embodiment of the controller 104 is depicted as a computer system including a processor 150 and a memory 152. The processor 150 may comprise any type of processor or multiple processors, single integrated circuits such as a microprocessor, or any suitable number of integrated circuit devices and/or circuit boards working in cooperation to carry out the described operations, tasks, and functions by manipulating electrical signals representing data bits at memory locations in the system memory, as well as other processing of signals. The memory 152 may comprise RAM memory, ROM memory, flash memory, registers, a hard disk, or another suitable non-transitory short or long-term storage media capable of storing computer-executable programming instructions or other data for execution. The memory 152 may be located on and/or co-located on the same computer chip as the processor 150. Generally, the memory 152 maintains data bits and may be utilized by the processor 150 as storage and/or a scratch pad during operation. Specifically, the memory 152 stores instructions and applications 160. Information in the memory 152 may be organized and/or imported from an external source during an initialization step of a process; it may also be programmed via a user input device 112. During operation, the processor 150 loads and executes one or more programs, algorithms and rules embodied as instructions and applications 160 contained within the memory 152 and, as such, controls the general operation of the controller 104 as well as the system 100.

The searchlight slew program 162 includes rules and instructions. The processor 150 loads the searchlight slew program 162 (thereby being programmed with the Searchlight slew program 162). When the processor 150 executes the searchlight slew program 162, this causes the controller 104 to perform the functions, techniques, and processing tasks associated with the operation of the system 100. The searchlight slew program 162 directs the processing of searchlight data with real time navigation data and cartesian input (e.g., loci) to determine differences/deviations between past, current, and intended next positions, orientations and ranges, as described hereinbelow. Searchlight slew program 162 and associated variables may be stored in a functional form on computer readable media, for example, as depicted, in memory 152. While the depicted exemplary embodiment of the controller 104 is described in the context of a fully functioning computer system, those skilled in the art will recognize that the mechanisms of the present disclosure are capable of being distributed as a program product 166.

As a program product 166, one or more types of non-transitory computer-readable signal bearing media may be used to store and distribute the searchlight slew program 162, such as a non-transitory computer readable medium bearing the searchlight slew program 162 and containing therein additional computer instructions for causing a computer processor (such as the processor 150) to load and execute the searchlight slew program 162. Such a program product 166 may take a variety of forms, and the present disclosure applies equally regardless of the type of computer-readable signal bearing media used to carry out the distribution. Examples of signal bearing media include: recordable media such as floppy disks, hard drives, memory cards and optical disks, and transmission media such as digital and analog communication links. It will be appreciated that cloud-based storage and/or other techniques may also be utilized as memory 152 and as program product time-based viewing of clearance requests in certain embodiments.

In various embodiments, the processor 150 and memory 152 of the controller 104 may be communicatively coupled (via a bus) to an input/output (I/O) interface 154 that enables intra controller 104 communication, as well as communications between the controller 104 and other system components, and between the controller 104 and the external data sources via the communication system and fabric 118. The I/O interface 154 may include one or more network interfaces and can be implemented using any suitable method and apparatus. In various embodiments, the I/O interface 154 is configured to support communication from an external system driver and/or another computer system. In one embodiment, the I/O interface 154 is integrated with the communication system and fabric 118 and obtains data from external data source(s) directly. Also, in various embodiments, the I/O interface 154 may support communication with technicians, and/or one or more storage interfaces for direct connection to storage apparatuses, such as a database.

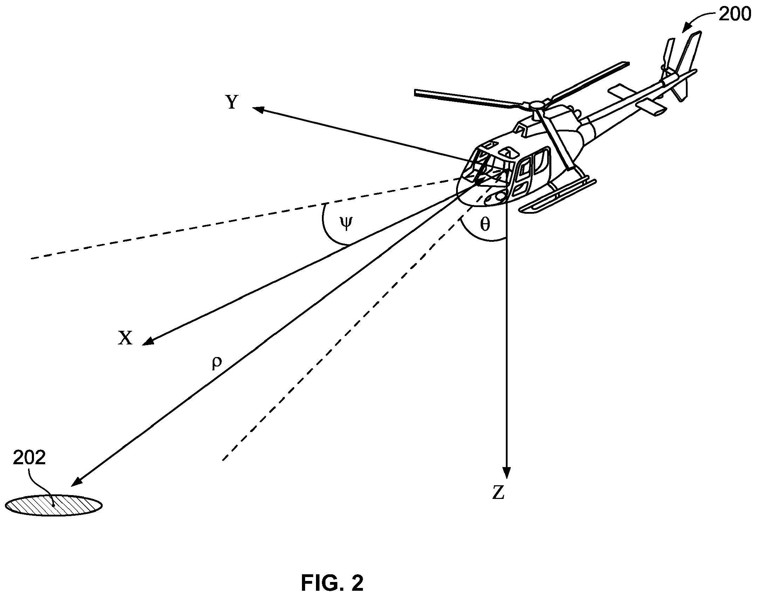

Turning now to the three-dimensional image depicted in FIG. 2, rotorcraft 200 including the control system 100 is shown at the origin of a cartesian coordinate system, with a beam of light projecting out from the light head 122 along an axis to a point 202. Traditional searchlights with independent pan and tilt control are generally controlled in spherical coordinates. Using spherical coordinates, the orientation of the beam of light projecting out to point 202, with respect to the earth, is described in terms elevation ($\theta$) (measured from the z-axis of the vehicle) and azimuth ($\psi$) (measured from the x-axis of the vehicle). The elevation ($\theta$) and azimuth ($\psi$) are controlled by pan and tilt angles. Further, to describe the location of point 202, the slant range $\rho$ is used. Therefore, the location of point 202 defined in the cartesian coordinate system as (x, y, z), can be translated to the 3-tuple $\{\rho, \theta, \psi\}$ in the spherical coordinate system, or vice versa.

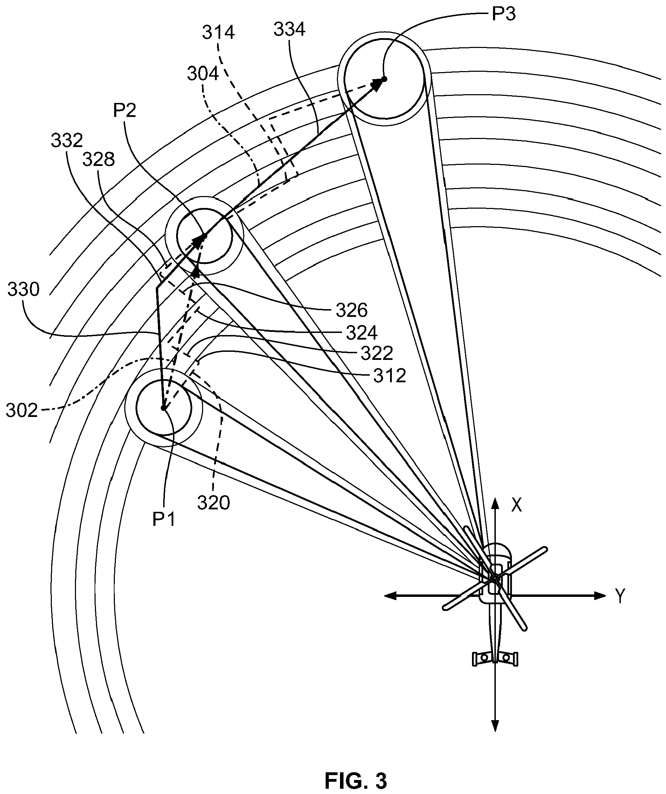

In practice, the task of tracing out a straight-line using pan and tilt is challenging when a searchlight light head 122 is to be panned with a non-zero tilt, as shown in FIG. 3. In FIG. 3, the ideal locus representing a desired path to be made by the beam axis touchdown (i.e., the point at which the beam axis intersects with the ground) is a sequence of straight-line segments including a first segment 302 from point P1 to point P2 and a second segment 304 from point P2 to point P3. However, the actual locus from a searchlight light head 122 panned with a non-zero tilt is parabolic, resulting in multiple sequential pan and tilt maneuvers to provide the locus 312 from point P1 to point P2, and another sequence of pan and tilt maneuvers to provide the locus 314 from point P2 to point P3. For example, moving from point P1 to point P2 along the locus 312 involves a first pan 320 moving the beam axis touchdown from point P1 to an intermediate point, followed by a first tilt 322, followed by a second pan 324, followed by a second tilt 326, followed by another pan 328 to arrive at point P2. In this regard, the task of slewing from point P1 to point P2 using pan and tilt is cognitively demanding and prone to inefficiencies and inaccuracies.

As described in greater detail below, the subject matter described herein facilitates a user manually slewing the beam axis associated with the lighting system 120 between points on the ground in a linear manner in response to user inputs provided in a Cartesian coordinate reference frame, for example, by allowing the user to slew the beam axis in a linear manner from point P1 along locus 330 in response to a Cartesian input in a forward direction until reaching an intermediate point from which to slew the beam axis in a linear manner to point P2 diagonally along locus 332, without requiring the user to identify the corresponding sequence and amount of pan and tilt commands required to achieve the desired loci 330, 332. Similarly, the subject matter described herein allows the user to slew the beam axis in a linear manner from point P2 to point P3 along locus 334 in response to a diagonal user input in the Cartesian reference frame. In this regard, the controller 104 receives cartesian inputs for slew commands (as used herein, the slew command collectively refers to the directional input commands, or commands to move the light head in a certain way) from the operator/pilot an interprets the cartesian inputs as requests to make straight lines on the ground. Concurrent with receiving the cartesian input, the controller 104 simultaneously generates respective azimuth and elevation commands for controlling the light head 122 (and its beam axis) in accordance with the cartesian input slew commands to achieve loci 330, 332, 334. Responsive to cartesian input sequentially provided, the controller 104 controls the light head and the pilot's experience is an improved human-machine experience, in that he is operating the searchlight controls in cartesian convention and having a resultant straight-line locus on the ground, rather than an indirect sequence of arcs and lines.

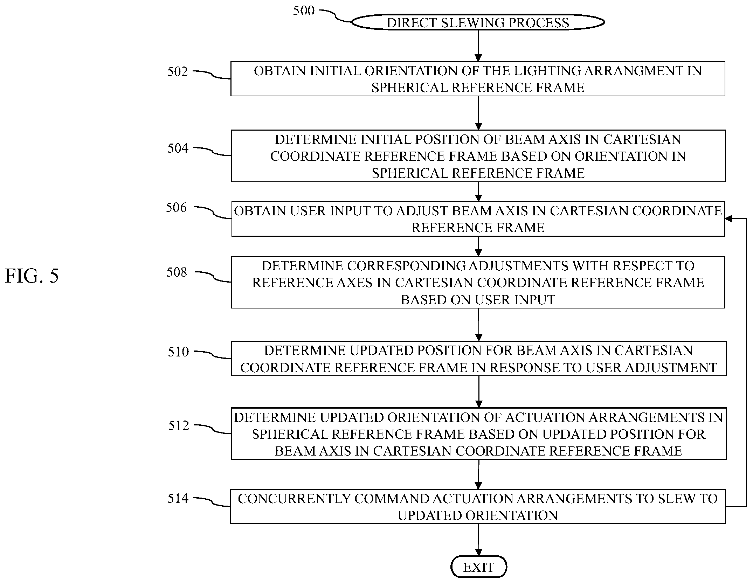

FIG. 5 depicts an exemplary embodiment of a direct slewing process 500 suitable for implementation by a control system associated with a lighting system, such as the controller 104 for the searchlight system 120, to support manually slewing the beam axis associated with the lighting system between points on the ground in a linear manner in response to user inputs provided in a Cartesian coordinate reference frame. In this regard, rather than beam axis moving in a sequence of arcs and lines from one point to the next desired point on the ground, the beam axis is slewed in a linear manner that will be perceived as a straight line directly between the two points. By directly slewing the beam axis between positions on the ground in a linear manner and accommodating diagonal or off-axis user inputs, the direct slewing process 500 improves human factors and the operator's mental model of how to manually adjust or control the beam axis independent of the aircraft elevation or the orientation of the lighting arrangement in a spherical (or polar) coordinate reference frame.

The various tasks performed in connection with the direct slewing process 500 may be implemented using hardware, firmware, software executed by processing circuitry, or any combination thereof. For illustrative purposes, the following description may refer to elements mentioned above in connection with FIG. 1. In practice, portions of the direct slewing process 500 may be performed by different elements of the system 100; however, for purposes of explanation, the direct slewing process 500 may be described herein primarily in the context of being implemented by the controller 104 and/or the processor 150. It should be appreciated that the direct slewing process 500 may include any number of additional or alternative tasks, the tasks need not be performed in the illustrated order and/or the tasks may be performed concurrently, and/or the direct slewing process 500 may be incorporated into a more comprehensive procedure or process having additional functionality not described in detail herein. Moreover, one or more of the tasks shown and described in the context of FIG. 5 could be omitted from a practical embodiment of the direct slewing process 500 as long as the intended overall functionality remains intact.

The illustrated embodiment of the direct slewing process 500 initializes or otherwise begins by identifying or otherwise obtaining an initial orientation of the lighting arrangement in a spherical coordinate reference frame and then calculating or otherwise determining a corresponding initial position of the beam axis in a Cartesian coordinate reference frame based on the orientation in the spherical reference frame (tasks 502, 504). In this regard, the direct slewing process 500 converts or otherwise transforms the spherical orientation of the light head 122 (or the actuators 124, 126 associated therewith) from the spherical coordinate reference frame into a corresponding position of the beam axis (e.g., point 202) in a Cartesian coordinate frame. For example, in exemplary embodiments, the Controller 104 and/or the processor 150 obtains the current pan angle (or elevation ($\theta$)) of the pan control actuator 124 and the current tilt angle (or azimuth ($\psi$)) of the tilt control actuator 126 from motor position sensors 130, and then calculates or otherwise determines a corresponding position for a projection of the beam axis on the ground (e.g., beam axis touchdown point 202) in two-dimensional coordinates ($X$, $Y$) in a Cartesian coordinate frame.

The direct slewing process 500 continues by receiving or otherwise obtaining a user input to adjust the beam axis in a Cartesian coordinate reference frame associated with the user input device and then calculating or otherwise determining corresponding adjustments for the beam axis in the Cartesian coordinate reference frame associated with the beam axis based on the received user input with respect to the Cartesian coordinate reference frame associated with the user input device (tasks 506, 508). In this regard, the direct slewing process 500 maps or otherwise converts a received user input in a two-dimensional Cartesian coordinate reference frame associated with a user input device 112 into a corresponding amount of adjustment with respect to the corresponding two-dimensional reference axes ($x, y$) for the Cartesian coordinate reference frame associated with the beam axis.

In exemplary embodiments, the controller 104 and/or processor 150 receives or otherwise obtains, from the user input device 112, signals indicative of the relative position of the user input with respect to an origin or reference position in the two-dimensional Cartesian coordinate reference frame associated with the user input device 112, or that otherwise indicate or correlate to the amount by which the user has manipulated the user input device 112 relative to the origin or reference position in the two-dimensional Cartesian coordinate reference frame associated with the user input device 112. The received user input may then be represented by a percentage of the maximum range of adjustment with respect to the respective axes of the two-dimensional Cartesian coordinate reference frame associated with the user input device 112.

For example, for a mechanical or physical user input device where the user input involves movement or motion of a mechanism over a range of motion (e.g., pressing a button, displacing a joystick, and/or the like), the controller 104 and/or processor 150 may analyze the signals output by the user input device 112 to identify the proportion or percentage of the range of motion over which the user input device 112 has been manipulated as well as the direction in which the user input device 112 has been manipulated with respect to the two-dimensional Cartesian coordinate reference frame associated with the user input device 112. In this regard, if the pilot, operator or other user depresses or otherwise manipulates the 8-way hat switch by 50% of the potential range of the 8-way hat switch, the controller 104 and/or processor 150 may identify the amount of adjustment as 50% in the direction in which the 8-way hat switch was manipulated (e.g., +50% in the x-direction for a forward (or upward) input, -50% in the x-direction for a reverse (or downward) input, +50% in the y-direction for a rightward input, -50% in the y-direction for a leftward input). In some embodiments, a diagonal or off-axis user input may be proportionally divided among the reference axes based on the relative direction of the user input. For example, depression or manipulation the 8-way hat switch in a diagonal direction by 50% of the potential range of the 8-way hat switch may be divided across the reference axes (e.g., +25% in the x-direction and +25% in the y-direction for a diagonally forward and to the right input, +25% in the x-direction and -25% in the y-direction for a diagonally forward and to the left input, -25% in the x-direction and +25% in the y-direction for a diagonally reverse and to the right input, -25% in the x-direction and -25% in the y-direction for a diagonally reverse and to the left input).

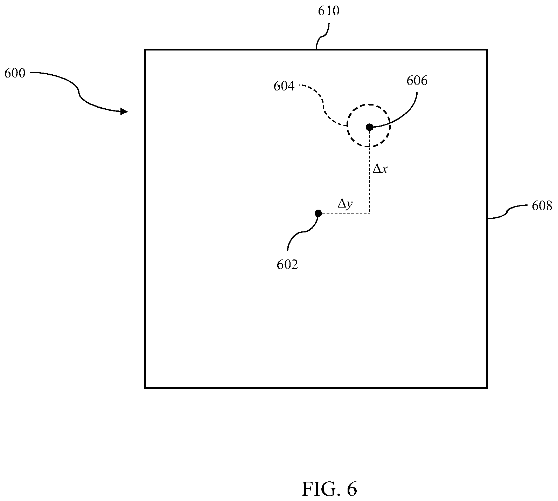

Referring to FIG. 6, in one or more embodiments, where the user input device 112 is realized as a tactile user input device 600 (e.g., a touchpad, a touch panel, or the like), the controller 104 and/or processor 150 calculates or otherwise determines the amount of adjustment based on the relative position of the tactile user input 604 with respect to the geometric center 602 of the tactile user input device 600 by mapping the position of the tactile user input 604 to corresponding positions with respect to the Cartesian reference axes associated with the tactile user input device 600, where the geometric center 602 of the tactile user input device 600 functions as the origin or reference position in the two-dimensional Cartesian coordinate reference frame associated with the tactile user input device 600. In this regard, the lateral (or horizontal) distance between the geometric center 602 of the tactile user input device 600 and the detected center position 606 of the tactile user input 604 may be divided by the lateral distance between the center 602 of the tactile user input device 600 and the lateral edge 608 of the tactile user input device 600 that represents the maximal adjustment in the lateral dimension to determine the percentage of adjustment to be made with respect to the y-axis in the Cartesian coordinate reference frame associated with the tactile user input device 600 (e.g., $\Delta y = 25\%$). Similarly, the vertical distance between the geometric center 602 of the tactile user input device 600 and the detected center position 606 of the tactile user input 604 may be divided by the vertical distance between the geometric center 602 of the tactile user input device 600 and the vertical edge 610 of the tactile user input device 600 that represents the maximal adjustment in the vertical dimension to determine the percentage of adjustment to be made with respect to the x-axis in the Cartesian coordinate reference frame associated with the tactile user input device 600 (e.g., Ax = 50%).

Still referring to FIG. 5 with continued reference to FIGS. 1-2 and 6, in exemplary embodiments, the controller 104 and/or the processor 150 calculates or otherwise determines corresponding adjustments for the beam axis in the Cartesian coordinate reference frame associated with the beam axis by multiplying the percentage amount of adjustment with respect to the Cartesian coordinate reference frame associated with the user input device by the maximum velocity or slew rate of the respective actuators 124, 126 associated with the light head 122 and the period associated with the sampling rate or frequency at which the controller 104 and/or the processor 150 samples the output of the user input device 112 and generates corresponding commands for the actuators 124, 126. For example, the amount of x-axis adjustment to be made with respect to the x-axis in the Cartesian coordinate reference frame associated with the beam axis may be calculated or otherwise determined using the equation $\Delta X = \frac{\Delta x \times v}{f}$, where $\Delta x$ represents the commanded percentage of adjustment with respect to the x-axis of the Cartesian coordinate reference frame associated with the user input device, v represents the maximum slew rate or rotational velocity of the tilt actuator 126 and $f$ represents the frequency as-

sociated with the control system associated with the controller 104 and/or the processor 150 sampling the output of the user input device 112 and generating corresponding commands for the actuators 124, 126. In a similar manner, the amount of y-axis adjustment to be made with respect to the y-axis in the Cartesian coordinate reference frame associated with the beam axis ($\Delta Y$) may be calculated or otherwise determined based on the commanded percentage of adjustment with respect to the y-axis of the Cartesian coordinate reference frame associated with the user input device and the maximum slew rate or rotational velocity of the pan actuator 124.

In some embodiments, the controller 104 and/or processor 150 may implement a timer or similar feature to measure the duration of time at which the user input is maintained at substantially the same location in the Cartesian coordinate reference frame (e.g., the holding time associated with the Cartesian user input) to dynamically vary, scale or otherwise increase the slew rate parameter (v) with respect to the holding time. In such implementations, the controller 104 and/or processor 150 may dynamically calculate or otherwise determine a scaling factor as a function of the holding time associated with the user input and then multiply the maximum slew rate (v) by the scaling factor to obtain an updated or scaled value for the slew rate parameter (v) in the equation for calculating the amount of adjustment. For example, over the course of a holding time of 5 seconds, the slew rate may increase by a factor of 10 (e.g., from $v/10$ to v). Thus, the slew rate utilized to determine the amount of x-axis and/or y-axis adjustment may linearly, exponentially, or otherwise progressively increase with respect to the holding time associated with the Cartesian user input, and the subject matter described herein is not limited to any particular implementation.

Referring again to FIG. 5, based on the amount of adjustments to be made with respect to the reference axes in the Cartesian coordinate reference frame, the direct slewing process 500 calculates or otherwise determines an updated position for the beam axis in the Cartesian coordinate frame to be commanded responsive to the input user adjustment, and then calculates or otherwise determines a corresponding updated orientation for the actuators associated with the lighting arrangement in the spherical reference frame based on the updated beam axis position (tasks 510, 512). For example, the controller 104 and/or the processor 150 may add, sum or otherwise combine the determined beam axis adjustments in the Cartesian coordinate reference frame ($\Delta X, \Delta Y$) to the initially determined position of the beam axis in a Cartesian coordinate reference frame (X, Y) to obtain an updated position for the beam axis in the Cartesian coordinate reference frame (X', Y') that reflects the input user adjustment ($X' = X + \Delta X, Y' = Y + \Delta Y$). Thereafter, in the opposite manner as described above at task 504, the controller 104 and/or the processor 150 converts or otherwise transforms the updated beam axis position in the Cartesian coordinate reference frame ($X'$, $Y'$) to a corresponding updated spherical orientation for the light head 122 in the spherical coordinate reference frame, resulting in an updated pan angle or azimuth ($\psi'$) for the pan control actuator 124 and an updated tilt angle or elevation($\theta'$) for the tilt control actuator 126.

After determining an updated orientation for the lighting arrangement actuators, the direct slewing process 500 concurrently commands or otherwise operates the actuators associated with the lighting arrangement to slew from the initial orientation prior to or at the time of receipt of the user input to the updated orientation that reflects the input user adjustment to the lighting arrangement (task 514). In this regard, the controller 104 and/or the processor 150 commands, signals, or otherwise instructs the pan control actuator 124 to rotate or otherwise slew the yaw of the light head 122 from the initial pan angle ($\psi$) to the updated pan angle ($\psi'$) while concurrently commanding, signaling or otherwise instructing the tilt control actuator 126 to rotate or otherwise slew the pitch of the light head 122 from the initial tilt angle ($\theta$) to the updated tilt angle ($\theta'$). By virtue of both actuators 124, 126 operating concurrently in a manner that reflects or is otherwise proportionate to the amount of user input adjustment in the Cartesian coordinate reference frame, the beam axis and corresponding touchdown point are slewed across the ground in a manner that is perceived as a direct, linear, straight-line motion, rather than an indirect sequence of one or more arcs and straight lines (e.g., FIG. 3).

In exemplary embodiments, the loop defined by tasks 506, 508, 510, 512 and 514 may repeat indefinitely at a rate corresponding to the frequency associated with the control system associated with the controller 104 and/or the processor 150 ($f$) for the duration of the user input. In this regard, as a pilot, operator or other user changes the direction associated with the user input to the 8-way hat switch 402, the direction in which the beam axis and corresponding touchdown point are slewed across the ground changes in a corresponding manner, while increasing or decreasing the pressure or range of motion associated with the user input to the 8-way hat switch may cause the frequency or rate at which the beam axis and corresponding touchdown point are slewed to change in a corresponding manner. Similarly, as a pilot, operator or other user changes the position of the tactile user input 604 relative to the origin or reference position 602 of a tactile user input device 600, the rate and direction in which the beam axis and corresponding touchdown point are slewed across the ground changes in a manner that reflects the current relationship between the tactile user input 604 and the reference position 602 substantially in real-time.

Accordingly, by allowing the beam axis for a searchlight to be linearly slewed in a Cartesian coordinate reference frame in an intuitive manner that cognitively maps to the user input provided in a Cartesian manner, the proposed systems and methods for searchlight control for a rotorcraft are technologically improved over conventional approaches to searchlight systems for a rotorcraft. The system for searchlight control for a rotorcraft also enables easy augmentation for any rotorcraft equipped with a smart searchlight and does not require any special or additional instrumentation and equipage.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate the interchangeability of hardware and software, various illustrative components, blocks, modules, circuits, and steps have been described above generally in terms of their functionality. Whether such functionality is implemented as hardware or software depends upon the application and design constraints imposed on the overall system.

Skilled artisans may implement the described functionality in varying ways for each application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

Further, the various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of the method or algorithm described in connection with the embodiments disclosed herein may be embodied directly in hardware, in a software module executed by a controller or processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

**Claims**

1. A method of operating a lighting arrangement onboard a vehicle, the method comprising:

   determining a first position associated with a beam axis of the lighting arrangement in a Cartesian reference frame based on an initial orientation of the lighting arrangement in a spherical reference frame;
   determining an adjustment for the lighting arrangement in the Cartesian reference frame in response to a user input;
   determining an updated position for the beam axis in the Cartesian reference frame based on the first position and the adjustment in the Cartesian reference frame;
   transforming the updated position for the beam axis in the Cartesian reference frame to an updated orientation of the lighting arrangement in the spherical reference frame; and
   commanding actuation arrangements associated with the lighting arrangement to slew the lighting arrangement from the initial orientation to the updated orientation in the spherical reference frame.

2. The method of claim 1, further comprising determining slewing commands in the Cartesian reference frame, wherein:

   the vehicle is situated at an origin of the Cartesian reference frame; and
   commanding the actuation arrangements comprises operating the actuation arrangements in accordance with the slewing commands in the Cartesian reference frame.

3. The method of claim 1, wherein commanding the actuation arrangements comprises:

   determining a first command for a pan control actuator of the lighting arrangement based on an updated azimuth in the spherical reference frame corresponding to the updated orientation;
   determining a second command for a tilt control actuator of the lighting arrangement based on an updated elevation in the spherical reference frame corresponding to the updated orientation; and
   concurrently operating the pan control actuator in accordance with the first command and the tilt control actuator in accordance with the second command.

4. The method of claim 3, wherein concurrently operating the pan control actuator in accordance with the first command and the tilt control actuator in accordance with the second command slews the beam axis of the lighting arrangement directly from the first position to the updated position in the Cartesian reference frame.

5. The method of claim 1, wherein determining the first position comprises:

obtaining an initial azimuth associated with a pan control actuator corresponding to the initial orientation of the lighting arrangement;

obtaining an initial elevation associated with a tilt control actuator corresponding to the initial orientation; and

transforming a combination of the initial azimuth and the initial elevation to the first position in the Cartesian reference frame.

6. The method of claim any preceding claim, wherein:

the first position comprises a first coordinate position associated with a first axis of the Cartesian reference frame and a second coordinate position associated with a second axis of the Cartesian reference frame; and

determining the adjustment comprises mapping the user input to a first adjustment along the first axis of the Cartesian reference frame and a second adjustment along the second axis of the Cartesian reference frame.

7. The method of claim 6, wherein:

the updated position comprises a first updated coordinate position associated with the first axis of the Cartesian reference frame and a second updated coordinate position associated with the second axis of the Cartesian reference frame;

the first updated coordinate position comprises a first sum of the first coordinate position and the first adjustment; and

the second updated coordinate position comprises a second sum of the second coordinate position and the second adjustment.

8. The method of claim 7, wherein transforming the updated position comprises transforming combination of the first updated coordinate position and the second updated coordinate position to an updated azimuth and an updated elevation in the spherical reference frame.

9. A computer-readable medium having computer-executable instructions stored thereon that, when executed by a processing system, cause the processing system to:

determine a first position associated with a beam axis of a lighting arrangement in a Cartesian reference frame based on an initial orientation of the lighting arrangement in a spherical reference frame;

determine an adjustment for the lighting arrangement in the Cartesian reference frame in response to a user input;

determine an updated position for the beam axis in the Cartesian reference frame based on the first position and the adjustment in the Cartesian reference frame;

transform the updated position for the beam axis in the Cartesian reference frame to an updated orientation of the lighting arrangement in the spherical reference frame; and

command actuation arrangements associated with the lighting arrangement to slew the lighting arrangement from the initial orientation to the updated orientation in the spherical reference frame.

10. The computer-readable medium of claim 9, wherein the computer-executable instructions cause the processing system to:

determine a first command for a pan control actuator of the lighting arrangement based on an updated azimuth in the spherical reference frame corresponding to the updated orientation;

determine a second command for a tilt control actuator of the lighting arrangement based on an updated elevation in the spherical reference frame corresponding to the updated orientation; and

concurrently operate the pan control actuator in accordance with the first command and the tilt control actuator in accordance with the second command.

11. The computer-readable medium of claim 10, wherein concurrently operating the pan control actuator in accordance with the first command and the tilt control actuator in accordance with the second command slews the beam axis of the lighting arrangement directly from the first position to the updated position in the Cartesian reference frame.

12. A system comprising:

a light to project a beam of light along a beam axis;

a pan control actuator coupled to the light and operable to pan the beam axis;

a tilt control actuator coupled to the light and operable to tilt the beam axis;

a user input device to receive a user input for adjustment of the beam axis; and

a controller coupled to the user input device, the pan control actuator and the tilt control actuator to:

determine a first position associated with the beam axis in a Cartesian reference frame based on an initial pan angle for the pan control actuator and an initial tilt angle for the tilt control actuator;

determine an adjustment in the Cartesian reference frame in response to the user input;

determine an updated position for the beam axis in the Cartesian reference frame based on the first position and the adjustment in the Cartesian reference frame;

transform the updated position for the beam axis in the Cartesian reference frame to an updated pan angle for the pan control actuator and an updated tilt angle for the tilt control actuator; and

concurrently operating the pan control actuator from the initial pan angle to the updated pan angle while operating the tilt control actuator from the initial tilt angle to the updated tilt angle to slew the beam axis from the first position to the updated position in response to the user input.

13. The system of claim 12, wherein the user input device comprises an 8-way hat switch.

14. The system of claim 12, wherein:

the user input device comprises a tactile user input device; and
the controller determines the adjustment by mapping a detected position of a tactile user input received from the tactile user input device to corresponding amounts of adjustment with respect to reference axes associated with the tactile user input device and determines the updated position by adding the amounts of adjustment to the first position.

15. The system of any one of claim 12 to 14, wherein the user input comprises a diagonal user input.

**FIG. 1**

**FIG. 2**

**FIG. 3**

402

400

**FIG. 4**

FIG. 5

500 — ( DIRECT SLEWING PROCESS )

502 — OBTAIN INITIAL ORIENTATION OF THE LIGHTING ARRANGMENT IN SPHERICAL REFERENCE FRAME

504 — DETERMINE INITIAL POSITION OF BEAM AXIS IN CARTESIAN COORDINATE REFERENCE FRAME BASED ON ORIENTATION IN SPHERICAL REFERENCE FRAME

506 — OBTAIN USER INPUT TO ADJUST BEAM AXIS IN CARTESIAN COORDINATE REFERENCE FRAME

508 — DETERMINE CORRESPONDING ADJUSTMENTS WITH RESPECT TO REFERENCE AXES IN CARTESIAN COORDINATE REFERENCE FRAME BASED ON USER INPUT

510 — DETERMINE UPDATED POSITION FOR BEAM AXIS IN CARTESIAN COORDINATE REFERENCE FRAME IN RESPONSE TO USER ADJUSTMENT

512 — DETERMINE UPDATED ORIENTATION OF ACTUATION ARRANGEMENTS IN SPHERICAL REFERENCE FRAME BASED ON UPDATED POSITION FOR BEAM AXIS IN CARTESIAN COORDINATE REFERENCE FRAME

514 — CONCURRENTLY COMMAND ACTUATION ARRANGEMENTS TO SLEW TO UPDATED ORIENTATION

( EXIT )

FIG. 6

Europäisches
Patentamt
European
Patent Office
Office européen
des brevets

# EUROPEAN SEARCH REPORT

Application Number

EP 23 15 6334

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 766 735 A1 (HONEYWELL INT INC [US]) 20 January 2021 (2021-01-20) | 1-13 | INV. B64D47/04 |
| Y | * paragraphs [0007] - [0009], [0017], [0020], [0027], [0032], [0035] - [0037], [0046] - [0049]; figures 1,2,4a,6 * | 14,15 | |
| Y | US 2019/075231 A1 (UEMURA HIDETAKA [JP]) 7 March 2019 (2019-03-07) | 14 | |
| A | * paragraph [0034] * | 2-13 | |
| Y | US 2020/394773 A1 (WILENSKY GREGG [US] ET AL) 17 December 2020 (2020-12-17) | 15 | |
| A | * paragraphs [0054], [0083]; figure 4 * | 1-13 | |
| A | US 2013/182449 A1 (FIDANZA RAPHAEL [FR]) 18 July 2013 (2013-07-18) * paragraphs [0039], [0040], [0065]; figures 1,2,7 * | 1-15 | |
| A | US 2013/261849 A1 (JUNGWIRTH DOUGLAS R [US] ET AL) 3 October 2013 (2013-10-03) * paragraphs [0068] - [0073]; figures 1-5 * | 1-15 | TECHNICAL FIELDS SEARCHED (IPC) B64D B60Q |

The present search report has been drawn up for all claims

| Place of search | Date of completion of the search | Examiner |
|---|---|---|
| Munich | 28 June 2023 | Busto, Mario |

EPO FORM 1503 03.82 (P04C01)

## ANNEX TO THE EUROPEAN SEARCH REPORT
## ON EUROPEAN PATENT APPLICATION NO.

EP 23 15 6334

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2023

| Patent document cited in search report | | Publication date | Patent family member(s) | | Publication date |
|---|---|---|---|---|---|
| EP 3766735 | A1 | 20-01-2021 | EP | 3766735 A1 | 20-01-2021 |
| | | | US | 10882637 B1 | 05-01-2021 |
| US 2019075231 | A1 | 07-03-2019 | CN | 109429011 A | 05-03-2019 |
| | | | EP | 3450311 A1 | 06-03-2019 |
| | | | JP | 6656214 B2 | 04-03-2020 |
| | | | JP | 2019045724 A | 22-03-2019 |
| | | | US | 2019075231 A1 | 07-03-2019 |
| US 2020394773 | A1 | 17-12-2020 | AU | 2020201976 A1 | 07-01-2021 |
| | | | CN | 112085663 A | 15-12-2020 |
| | | | DE | 102020001437 A1 | 17-12-2020 |
| | | | GB | 2585423 A | 13-01-2021 |
| | | | US | 2020394773 A1 | 17-12-2020 |
| | | | US | 2021407054 A1 | 30-12-2021 |
| US 2013182449 | A1 | 18-07-2013 | CN | 102897326 A | 30-01-2013 |
| | | | EP | 2581310 A1 | 17-04-2013 |
| | | | FR | 2978425 A1 | 01-02-2013 |
| | | | US | 2013182449 A1 | 18-07-2013 |
| US 2013261849 | A1 | 03-10-2013 | CA | 2802185 A1 | 02-10-2013 |
| | | | CN | 103363985 A | 23-10-2013 |
| | | | GB | 2502689 A | 04-12-2013 |
| | | | JP | 5792218 B2 | 07-10-2015 |
| | | | JP | 2013212835 A | 17-10-2013 |
| | | | US | 2013261849 A1 | 03-10-2013 |

EPO FORM P0459

For more details about this annex : see Official Journal of the European Patent Office, No. 12/82

**REFERENCES CITED IN THE DESCRIPTION**

**Patent documents cited in the description**

• IN 202211011207